Europäisches Patentamt

European Patent Office

Office européen des brevets

(19)

(11) Veröffentlichungsnummer : **0 120 191**
**B1**

(12) # EUROPÄISCHE PATENTSCHRIFT

(45) Veröffentlichungstag der Patentschrift :
29.07.87

(21) Anmeldenummer : 84100359.3

(22) Anmeldetag : 14.01.84

(51) Int. Cl.⁴ : **B 60 K 41/06**

(54) Kontrolleinrichtung für ein Fahrzeuggetriebe zur Feststellung des wirtschaftlichen Fahrbereichs.

(30) Priorität : 28.03.83 DE 3311306

(43) Veröffentlichungstag der Anmeldung :
03.10.84 Patentblatt 84/40

(45) Bekanntmachung des Hinweises auf die Patenterteilung : 29.07.87 Patentblatt 87/31

(84) Benannte Vertragsstaaten :
AT CH DE FR GB IT LI NL SE

(56) Entgegenhaltungen :
EP-A- 0 007 861
DE-A- 2 836 082
DE-A- 2 852 195
DE-A- 2 933 714
DE-A- 3 016 032
DE-A- 3 101 056
DE-A- 3 248 236
DE-A- 3 246 201
FR-A- 2 435 635
GB-A- 2 053 367

(73) Patentinhaber : WABCO Westinghouse Fahrzeugbremsen GmbH
Am Lindener Hafen 21 Postfach 91 12 80
D-3000 Hannover 91 (DE)

(72) Erfinder : Der Erfinder hat auf seine Nennung verzichtet

(74) Vertreter : Schrödter, Manfred et al
WABCO Westinghouse Fahrzeugbremsen GmbH Am
Lindener Hafen 21 Postfach 91 12 80
D-3000 Hannover 91 (DE)

# 0 120 191

## Beschreibung

Die Erfindung bezieht sich auf eine Kontrolleinrichtung für ein von einer Antriebsmaschine über ein abgestuftes Getriebe angetriebenes Fahrzeug gemäß dem Oberbegriff des Patentanspruchs 1.

Beim manuellen Schalten eines Getriebes für ein Fahrzeug, insbesondere für ein Straßen-Nutzfahrzeug, kommt es vor, daß das Drehmoment im neu eingelegten Gang nicht ausreicht, um das Fahrzeug in der vor dem Gangwechsel vorhandenen Geschwindigkeit weiterfahren zu lassen. Es muß daher wieder zurückgeschaltet werden. Das Einschätzen und Voraussehen einer solchen Situation durch den Fahrzeug-Führer ist schwierig und ungenau. Falsche Gangwechsel bedeuten jedoch, daß das Fahrzeug unwirtschaftlich, insbesondere mit zu hohem Kraftstoffverbrauch, gefahren wird.

Die beschriebenen Situationen können auch bei automatisch arbeitenden Getrieben auftreten. Diese Getriebe sind deshalb so ausgelegt, daß nur bei hoher Leistungsreserve geschaltet wird. Dies bedeutet ebenfalls eine unwirtschaftliche Fahrweise.

Die Auswahl des günstigsten Betriebspunktes einer aus einem Motor und einem Getriebe bestehenden Antriebseinheit ist von vielen Faktoren abhängig. Selbst die Definition des « günstigsten Betriebspunktes » ist schwierig, da der Punkt günstigsten Verbrauchs im Kennlinienfeld eines Motors in der Regel nicht der Punkt maximaler Leistung ist. Je nach Anforderungen und äußeren Bedingungen müssen die Gangauswahlkriterien zwischen den verschiedenen als « günstig » eingestuften Betriebspunkten variiert werden.

Die Qualität dieser Kriterien ist entscheidend von der Konstanz der verwendeten Größen abhängig. Werden beispielsweise Motormomente ermittelt, dann sind diese unter anderem abhängig von der Kraftstoffdichte, von der Höhenlage, in der der Motor betrieben wird, von der Kraftstoffqualität, von der Motortemperatur usw. Werden die Motormomente mit nach theoretischen oder empirischen Methoden ermittelten konstanten Werten verglichen, dann wird das Ergebnis bei Auftreten einer Abweichung eines der vielen Einflußfaktoren einen Fehler aufweisen.

Eine naheliegende Lösung ist es nun, möglichst viele der wichtigsten Einflußgrößen mit eigenen Sensoren zu erfassen und auszuwerten, was einen großen Aufwand erfordert.

Auch die Genauigkeit, mit der ein Wert ermittelt wird, ist bei der Ermittlung von Schaltpunkten, insbesondere bei mit großem Last-/Leerverhältnis betriebenen Nutzfahrzeugen, von entscheidender Bedeutung. Sollen beispielsweise die bei konstanter Geschwindigkeit am Fahrzeug auftretenden Fahrwiderstände genau ermittelt werden, dann müßten Größen wie Veränderungen des Luftwiderstandsbeiwertes $C_W$ durch Aufbauänderungen, Luftdichte, Änderungen der Rollreibung der Reifen auf der Straße bei unterschiedlichen Reifenprofilen und unterschiedlichem Verschleißzustand, Straßenprofil usw. erfaßt werden. Hinzu kommt, daß bestimmte Größen wie Lagerreibung und Getriebe-Wirkungsgrad sich an Serienfahrzeugen ohne großen Aufwand nicht ermitteln lassen.

Der Erfindung liegt die Aufgabe zugrunde, genaue Schaltpunkte für ein Fahrzeug-Getriebe zu ermitteln, wobei möglichst wenig Pheripherie-Geräte (Sensoren) eingesetzt werden sollen. Insbesondere soll festgestellt werden, ob der Betriebspunkt im neuen Gang in einem wirtschaftlicheren Bereich liegt als der Betriebspunkt im alten Gang.

Diese Aufgabe wird mit den im Patentanspruch 1 angegebenen Merkmalen gelöst. Vorteilhafte Ausführungsbeispiele und Weiterbildungen der Erfindung sind in den Unteransprüchen angegeben.

Die Merkmale a) bis c) von Anspruch 1, die der Gewichtsermittlung dienen, sind bereits in der älteren EP-A-111 636 enthalten.

Die Erfindung geht von der folgenden Erkenntnis aus : zu jedem beliebigen Zeitpunkt setzt sich das fahrzeugantreibende momentane Antriebsmoment $M_A$ zusammen aus einem stationären Antriebsmoment $M_{stat}$, das zur Weiterfahrt des Fahrzeugs ohne Beschleunigung oder Verzögerung des Fahrzeugs erforderlich ist, und einem eine Beschleunigung oder Verzögerung des Fahrzeugs bewirkenden Beschleunigungsmoment $M_b$. Dies bedeutet, daß das stationäre Antriebsmoment $M_{stat}$ wie folgt berechnet werden kann :

$$M_A = M_{stat} + M_b$$

$$M_b = G \cdot f(\ddot{s})$$

$$M_{stat} = M_A - G \cdot f(\ddot{s})$$

wenn die Größen $M_A$, G und $\ddot{s}$ vorliegen bzw. gemessen werden können. Im einzelnen bedeuten in den Gleichungen :

$M_{stat}$ = stationäres Antriebsmoment
$M_A$ = momentanes Antriebsmoment
$M_b$ = Beschleunigungsmoment
G = Gewicht des Fahrzeugs
$\ddot{s}$ = Beschleunigung des Fahrzeugs

Der Ausdruck f ($\ddot{s}$) bedeutet, daß die Fahrzeug-Beschleunigung mit einem Faktor versehen sein kann.

2

Alle Größen können aus den tatsächlichen Werten abgeleitet sein.

Das stationäre Moment $M_{stat}$ kann als die Summe der Fahrwiderstände bei geschwindigkeitskonstanter Fahrt aufgefaßt werden. Diese Fahrwiderstände sind die Rollreibung, die Luftreibung und der Steigungswiderstand.

Da die in der Formel für $M_{stat}$ stehenden Größen leicht ermittelt werden können, läßt sich so die umständliche und ungenaue Erfassung der einzelnen Fahrwiderstände umgehen.

Das zur Auswertung der Gleichung für $M_{stat}$ notwendige genaue Fahrzeug-Gewicht kann über die Fahrzeug-Beschleunigung, wie in der älteren EP-A-111 636 beschrieben, bestimmt werden. Wesentlich ist, daß das genaue Gewicht bekannt ist, und nicht, wie in bekannten Anmeldungen von einem angenommenen Fahrzeuggewicht ausgegangen wird (z. B. DE-A 30 18 032, DE-A 31 01 056).

In der DE-A 30 18 032 werden in Gleichungszusammenhängen die Fahrzustände beschrieben, und Annahmen über Werte von Fahrwiderständen, Teile von Fahrwiderständen und die Masse des Fahrzeugs eingeführt. Die Verwendung von physikalische Zusammenhänge beschreibende Gleichungen, in die angenommene Größen eingeführt werden, kann die Möglichkeit bieten, die angenommenen Größen so umzuformen, daß sich daraus weitere Größen ergeben. Der Anwendungsbereich dieser Größen ist auf bestimmte Fahrsituationen abgestimmt. Außerdem müssen die Werte, mit denen diese Größen verglichen werden, auf empirische Weise angepaßt werden, um Verfälschungen auszuscheiden. Beispielsweise würde bei Nutzfahrzeugen, die üblicherweise ein sehr großes Last-/Leerverhältnis aufweisen und stark untermotorisiert sind, eine solche Schaltung in weiten Bereichen unzureichende Ergebnisse liefern.

Um einen sinnvollen, unverfälschten Regel- oder Steuereingriff machen zu können, ist es außerdem wichtig, zu ermitteln, woher beispielsweise eine zu kleine Fahrzeugbeschleunigung kommt. Dies kann am Fahrzeuggewicht, an der gerade vorliegenden Steigung oder an beidem liegen.

In der vorgeschlagenen Schaltung werden die Größen annahmenfrei und damit genauer bestimmt.

Es ist Zweckmäßig, die Motormomente über ein Motor-Kennlinienfeld zu ermitteln und die Schwellwerte auf diese Größen zu beziehen, um damit Störeinflüsse von außen auf den Motor auszuschalten.

Im Stand der Technik gemäß DE-A 29 33 714 und DE-A 31 01 056 werden Einrichtungen beschrieben, die den verbrauchsgünstigsten Betriebspunkt bestimmen. Damit ist das momentan vom Motor abgegebene Antriebsmoment gemeint.

Die im Patentanspruch 1 vorgeschlagene Anordnung bestimmt den günstigsten Betriebspunkt für das stationäre Antriebsmoment $M_{stat}$, also das Antriebsmoment, das zur Überwindung der Fahrwiderstände erforderlich ist. Weiterhin ist zur Bestimmung des verbrauchsgünstigsten Betriebspunktes wichtig, daß die verwendeten Größen möglichst genau bestimmt werden, denn jedes Prozent an Wirkungsgradverbesserung zahlt sich beim Betrieb eines Fahrzeugs ständig aus.

Die Lösung, das stationäre Antriebsmoment in den wirtschaftlichen Betriebsbereich zu legen und nicht das momentane Antriebsmoment, bietet den Vorteil einer wirtschaftlicheren Fahrweise, da das Fahrzeug in der Regel nach kurzer Zeit den Beschleunigungsvorgang beendet hat und dann stationär weiterläuft. Für diesen Fahrzustand ist der günstigste Betriebspunkt zu suchen. Es ist also dann kein erneutes Umschalten erforderlich, wenn der Beschleunigungsvorgang beendet ist.

Weiterhin wird nach der erfindungsgemäßen Ausgestaltung für die Berechnung möglichst aller erforderlichen Größen von einmal festgelegten Werten ausgegangen.

Im vorgeschlagenen Fall wird das unter bestimmten Betriebsbedingungen ermittelte Kennlinienfeld des verwendeten Motors, in dem Motorausgangsmoment über Motordrehzahl bei verschiedenen Motorsteuerbetriebspunkten aufgetragen sind, in einem Speicher abgelegt. Die theoretisch oder empirisch ermittelten Werte für die Grenzen des verbrauchsgünstigsten Betriebsfeldes im Motorkennlinienfeld, die zur Erstellung von Schaltkriterien mit dem Wert $M_{stat}$ verglichen werden, beziehen sich ebenfalls auf die Werte des gespeicherten Kennlinienfeldes. Diese Vorgehensweise hat den Vorteil, daß sich bei Verschiebungen des Kennlinienfeldes z. B. durch veränderte Kraftstoffdichte oder veränderter Höhenlage, das Verhältnis der Größen bei den beschriebenen Wertevergleichen nicht ändert und somit fehlerfreie Werte geliefert werden.

Würde das Motormoment beispielsweise direkt gemessen und mit theoretisch oder empirisch festgelegten Werten verglichen werden, damm müßte bei Veränderungen des Motormomentes durch äußere Einflüsse eine Korrektur der Werte vorgenommen werden, um ein fehlerfreies Ergebnis zu bekommen.

Ein Vergleich von theoretisch oder empirisch ermittelten Momenten mit dem stationären Moment $M_{stat}$ mit vorgegebenen Werten hat folgenden Vorteil :

Wenn vor dem Einlegen eines neuen Ganges geprüft wird, ob das im neuen Gang, entsprechend der Getriebeübersetzung transformierte, abzufordernde stationäre Antriebsmoment in einem wirtschaftlicheren Bereich liegt als das stationäre Antriebsmoment im alten Gang, kann die Gangauswahl so gestaltet werden, daß ständig eine Sperreinrichtung das Einlegen eines insofern ungünstigen Ganges verhindert.

Unter dem Motor-Kennlinienfeld sind auch Kennlinienfelder zu verstehen, die den Betriebszustand des Motors indirekt beschreiben, wie beispielsweise die Zahlenwerte der Kraftstoffeinspritzzeiten.

Weiterhin sind unter den in den Patentansprüchen verwendeten « Momenten » auch Antriebsgrößen allgemein zu verstehen, also zum Beispiel auch Leistungsgrößen oder solche vergleichbaren Größen, die die Antriebsmomente lediglich als eine von mehreren Rechengrößen enthalten.

3

Die Erfindung wird im Folgenden anhand eines Ausführungsbeispiels, das in der Zeichnung dargestellt ist, und eines Diagramms näher erläutert.

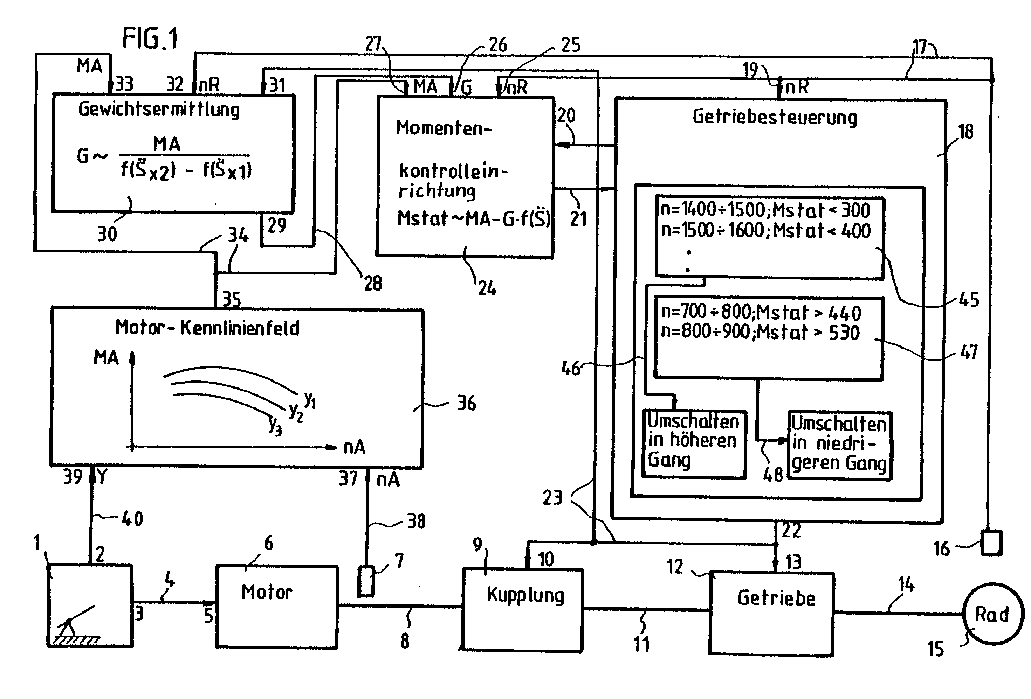

Die Zeichnung nach Fig. 1 zeigt in vereinfachter Darstellung die wesentlichen Elemente eines von einer Antriebsmaschine angetriebenen Fahrzeugs. Als Antriebsmaschine dient ein Verbrennungsmotor 6, dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist.

Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signaleingang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgröße (Motor-Steuergröße) y darstellt. Diese Signalgröße y ist an einem Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann jedoch auch — wie im dargestellten Ausführungsbeispiel — als elektrischer oder elektronischer Geber ausgebildet sein, wenn der Motor 6 entsprechend mittels eines Steuersignals steuerbar ist.

Die zwischen der antriebsseitigen Welle 8 und der abtriebsseitigen Welle 1 angeordnete Kupplung 9 ist mittels eines Steuersignals betätigbar, das einem Signaleingang 10 der Kupplung 9 zuführbar ist.

Das Getriebe 12 ist ebenfalls elektrisch steuerbar, wobei Signaleingänge 13 des Getriebes 12 zum Empfang entsprechender Steuersignale zum Einlegen des jeweils gewünschten oder erforderlichen Ganges dienen. Sowohl die Kupplung 9 als auch das Getriebe 12 können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

Zur Steuerung des Getriebes 12 ist eine Getriebesteuerung 18 vorgesehen. Im einfachsten Fall arbeitet diese Getriebesteuerung 18 so, daß das Getriebe 12 in Abhängigkeit von der Geschwindigkeit des Fahrzeugs und somit in Abhängigkeit von der Drehzahl $n_R$ der angetriebenen Räder automatisch geschaltet wird. Zur Erfassung der Drehzahl $n_R$ des angetriebenen Rades 15 dient ein Sensor 16, dessen Drehzahl-Signal über eine Signalleitung 17 einem Signaleingang 19 der Getriebesteuerung 18 zugeführt ist. Über Signalausgänge 22 und entsprechende Signalleitungen 23 ist die Getriebesteuerung 18 mit den Signaleingängen 13 des Getriebes 12 und dem Signaleingang 10 der Kupplung 9 verbunden.

Wenn mittels der Getriebesteuerung 18 in Abhängigkeit von der Geschwindigkeit des Fahrzeugs und unter Berücksichtigung vorgegebener Auswahlkriterien ein neuer Gang festgelegt wird, wird die Kupplung 9 über ihren Signaleingang 10 betätigt und anschließend bei getrennter Kupplung das Getriebe 1 über seine Signaleingänge 13 von der Getriebesteuerung 18 umgeschaltet. Danach wird dann die Kupplung 9 wieder geschlossen. Die Steuerung bzw. Betätigung der Kupplung 9 und des Getriebes 12 können — wie oben angedeutet — auch rein mechanisch über Servomotoren der Getriebesteuerung 18 erfolgen.

Zu den vorstehend erwähnten Auswahlkriterien, nach denen in der Getriebesteuerung 18 jeweils ein neuer Gang festgelegt wird, gehört im dargestellten Ausführungsbeispiel eine Überprüfung bzw. ein Vergleich, ob der Betriebspunkt für das stationäre Moment nach dem Einlegen des an sich ausgewählten neuen Ganges innerhalb der den verbrauchsgünstigen Betriebsbereich kennzeichnenden Grenzen liegt.

Für den erwähnten Vergleich zwischen dem jeweiligen stationären Antriebsmoment $M_{stat}$ und dem für den an sich ausgewählten neuen Gang verbrauchsgünstigen Betriebsbereich ist eine erste Vergleichseinrichtung 45 vorgesehen, die in die Getriebesteuerung 18 integriert ist. Ebenfalls in die Getriebesteuerung 18 integriert ist eine Einrichtung, die die Werte der Grenzlinien des verbrauchsgünstigen Betriebsbereiches speichert.

Es versteht sich, daß bei dem erwähnten Vergleich der Antriebsmomente nicht das jeweilige stationäre Antriebsmoment direkt mit dem angemessenen Antriebsmoment des betreffenden neuen Ganges verglichen wird, sondern daß bei diesem Vergleich das stationäre Antriebsmoment entsprechend dem Übersetzungsverhältnis zwischen dem jeweils eingeschalteten und dem betreffenden neuen Gang transformiert wird. Aus diesem Grund ist im dargestellten Ausführungsbeispiel als Vergleichsgröße $M'_{stat}$ statt $M_{stat}$ angegeben.

Es ist auch möglich, statt des stationären Antriebsmomentes bzw. dem gemäß dem Übersetzungsverhältnis des Getriebes transformierten Wert andere, von den Antriebsmomenten abgeleiteten Größen wie z. B. Kräfte, Leistungen oder solche Vergleichsgrößen, die die Antriebsmomente lediglich als eine von mehreren Rechengrößen enthalten, miteinander zu vergleichen.

In der ersten Vergleichseinrichtung 45 sind die Werte der Grenzlinien für den wirtschaftlichsten Kraftstoffverbrauchsbereich bestimmten Drehzahlbereichen zugeordnet. So ist beispielsweise der Momentenbereich für das stationäre Moment $M_{stat} < 300$ einem Drehzahlbereich $n = 1\,400 \div 1\,500$ zugeordnet usw. Der Vergleich wird dann so durchgeführt, daß zunächst geprüft wird, ob die aktuelle Motordrehzahl in den Bereich der gespeicherten Tabellenwerte für n fällt, beispielsweise $n = 1\,400 \div 1\,500$. Anschließend wird geprüft, ob das stationäre Antriebsmoment in den der Tabelle entsprechenden, der Drehzahl zugeordneten Momentenbereich, beispielsweise $M_{stat} < 300$, fällt. Ist

4

dieses Kriterium erfüllt, wird über eine Signalleitung 46 ein Signal zum Umschalten in den nächst höheren Gang abgegeben.

In ähnlicher Weise gibt eine zweite Vergleichseinrichtung 47 ein Signal 48 zum Umschalten in einen niedrigeren Gang ab, wenn das entsprechende Kriterium erfüllt ist. Alle in den Vergleichseinrichtungen 45 und 47 gespeicherten Werte der Grenzlinien für den wirtschaftlichsten Kraftstoffverbrauchsbereich beziehen sich immer auf die im Motor-Kennfeldspeicher 36 abgelegten Werte.

Für die Berechnung oder Bestimmung des stationären Antriebsmomentes oder einer daraus abgeleiteten stationären Antriebsgröße ist eine Momenten-Kontrolleinrichtung 24 vorgesehen, die die für den oben erwähnten Vergleich erforderliche stationäre Antriebsgröße (z. B. $M_{stat}$ oder $M'_{stat}$) über Signalleitungen 21 an die Getriebesteuerung 18 liefert, sofern die Getriebesteuerung 18 über Abfrage-Signalleitungen 20 die entsprechende Größe abfragt. Damit ist gewährleistet, daß die Getriebesteuerung 18 nach der Auswahl eines oder mehrerer gemäß der Drehzahl $n_R$ des Rades 15 an sich zulässiger neuer Gänge für jeden dieser Gänge den Vergleich zwischen dem erforderlichen stationären Antriebsmoment und dem dem betreffenden neuen Gang angemessenen Antriebsmoment vornimmt. Das Ergebnis dieses Vergleichs ist dann, daß der z. B. verbrauchsgünstigste neue Gang ausgewählt wird, der das Fahrzeug in jedem Fall so antreibt, daß es wenigstens ohne nennenswerte Verzögerung weiterfährt, oder daß kein neuer Gang eingelegt wird, weil in keinem der an sich ausgewählten neuen Gänge eine Weiterfahrt des Fahrzeugs ohne nennenswerte Verzögerung gewährleistet ist.

In der Momenten-Kontrolleinrichtung 24 wird das jeweilige stationäre Antriebsmoment $M_{stat}$ dadurch bestimmt, daß die Differenz zwischen dem tatsächlichen vom Motor 6 aufgebrachten jeweiligen momentanen Antriebsmoment $M_A$ des Fahrzeugs und einer solchen Rechengröße bestimmt wird, die sich als das Produkt aus dem Gewicht des Fahrzeugs und dem Rechenwert der momentanen Beschleunigung des Fahrzeugs ergibt. Um die erwähnte Differenz berechnen zu können, werden der Momenten-Kontrolleinrichtung 24 über einen Signaleingang 27 das transformierte momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt. Der Signaleingang 27 der Momenten-Kontrolleinrichtung 24 ist über eine Leitung 34 an den Signalausgang 35 des Motor-Kennfeld-Speichers 36 angeschlossen, der an dem erwähnten Signalausgang 35 ein dem momentanen Antriebsmoment MA des Motors 6 entsprechendes Signal zur Verfügung stellt. Der Signaleingang 26 der Momenten-Kontrolleinrichtung 24 ist über eine Signalleitung 29 an eine Auswerteeinrichtung (Gewichtsermittlung) 30 zur Ermittlung des Gewichts des Fahrzeugs angeschlossen. An diesem Signalausgang 29 der Auswerteeinrichtung 30 steht ein dem Gewicht des Fahrzeugs entsprechendes Signal zur Verfügung. Der Signaleingang 25 der Momenten-Kontrolleinrichtung 24 ist über die Signalleitung 17 mit dem Sensor 16 zur Erfassung der Rad-Drehzahl $n_R$ verbunden. In der Momenten-Kontrolleinrichtung 24 wird durch Differenzierung aus dem zeitlichen Verlauf der Drehzahl $n_R$ des Rades 15 die Beschleunigungsgröße š des Fahrzeugs berechnet. Das jeweilge momentane Antriebsmoment $M_A$ des Motors 6 wird aus dem Motor-Kennfeldspeicher 36 ermittelt, welches die Abhängigkeit der folgenden Größen voneinander enthält :

Momentanes Antriebsmoment $M_A$ des Motors 6, Drehzahl $n_R$ des Motors 6 und Steuergröße y des Gebers (Gaspedal) 1. Im dargestellten Ausführungsbeispiel enthält der Speicher 36 für verschiedene Werte ($y_1$, $y_2$, $y_3$) der Steuergröße y des Gebers 1 je eine Kennlinie für die Abhängigkeit des momentanen Antriebsmomentes $M_A$ von der Drehzahl $n_A$.

Die Steuergröße y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Speichers 36 zugeführt, der so ausgebildet ist, daß er für jedes Wertepaar $y/n_A$ das momentane Antriebsmoment $M_A$ an seinem Signalausgang 35 zur Verfügung stellt. Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der bereits in der älteren EP-A-111 636 beschriebenen Gewichtsermittlung 30 zur Ermittlung des Gewichtes des Fahrzeugs wird das Verhältnis zwischen dem momentanen Antriebsmoment $M_A$ des Motors 6 und einer Differenz zweier Rechengrößen gebildet, wobei die erwähnten Rechengrößen jeweils eine der Beschleunigung des Fahrzeugs entsprechende Beschleunigungsgröße enthalten. Diese beiden Beschleunigungsgrößen $š_{x_2}$ und $š_{x_1}$ werden zu verschiedenen Zeiten ermittelt, wobei die eine Beschleunigungsgröße zu einem Zeitpunkt ermittelt wird, in dem sich das Fahrzeug in einem antriebslosen Zustand, z. B. in einer Schaltpause, befindet. In diesem antriebslosen Zustand wird das Fahrzeug nicht wesentlich beschleunigt oder verzögert.

Um die erwähnte Rechenoperation durchführen zu können, wird der Gewichtsermittlung 30 über die Signalleitung 34 und einem Signaleingang 33 das momentane Antriebsmoment $M_A$ des Motors 6 zugeführt. Der zur Bildung der Beschleunigungsgrößen $š_{x_2}$ und $š_{x_1}$ erforderliche zeitliche Verlauf der Drehzahl $n_R$ des angetriebenen Rades 15 wird über die Signalleitung 17 einem Signaleingang 32 der Gewichtsermittlung 30 zugeführt. Über die Signalleitungen 23 wird einem Signaleingang 31 der Gewichtsermittlung 30 der Zeitpunkt mitgeteilt, zu dem die Kupplung 9 geöffnet ist. Damit kann zwischen solchen Zeiten, in denen das Fahrzeug dem Antrieb durch den Motor 6 unterliegt, und solchen Zeiten, in denen das Fahrzeug nicht dem Antrieb des Motors 6 unterliegt, unterschieden werden. Zu diesen

5

unterschiedlichen Zeiten werden die Beschleunigungsgrößen $\ddot{s}_{X_2}$ und $\ddot{s}_{X_1}$ gemessen bzw. bestimmt.
Die allgemeine Formel zur Ermittlung des Fahrzeuggewichtes G lautet :

$$G = \frac{M_{A_1} - M_{A_2}}{f(\ddot{s}_{X_1}) - f(\ddot{s}_{X_2})}$$

Werte mit Index 1 sind zum Zeitpunkt 1 und Werte mit Index 2 sind zum Zeitpunkt 2 ermittelt.

Neben dem oben beschriebenen Sonderfall $M_{A_2} = 0$, der für die Schaltpause gilt, kann auch der Sonderfall $f(\ddot{s}_{X_2}) = 0$ ausgewertet werden. Dieser gilt für unbeschleunigte Fahrt.

Die obige Gleichung kann auch allgemein, ohne die Sonderfälle abzuwarten, ausgewertet werden. Dabei ist darauf zu achten, daß die beiden Meßpunkte nicht zu weit auseinander liegen. Um jedoch eine ausreichende Genauigkeit für die Gewichtsgröße zu erhalten, sollte die Differenz der Antriebsmomente $M_{A_1}$ und $M_{A_2}$ möglichts groß gewählt werden.

Die Gewichtsermittlung 30 kann auch so ausgebildet sein, daß verschiedene ermittelte Gewichtsgrößen G zur Bildung eines Mittelwertes für die Gewichtsgrößen verwendet werden und daß dieser Mittelwert eine vorbestimmte Änderung nicht überschreitet.

Um sicherzustellen, daß auch dann, wenn in der Auswerteeinrichtung 30, z. B. wegen zu kurzer Fahrzeit, noch kein ausreichend genauer Wert für die Gewichtsgröße G vorliegt, in der Momenten-Kontrolleinrichtung 24 ein brauchbarer Wert für das stationäre Antriebsmoment $M_{stat}$ bestimmt werden kann, ist es vorteilhaft, statt der von der Auswerteeinrichtung 30 ermittelten Gewichtsgröße G zunächst eine mittlere Gewichtsgröße $G_0$ zu verwenden, die z. B. einem halbbeladenen Fahrzeug entspricht.

Für eine sichere Bestimmung und Berechnung der Gewichtsgröße G eignet sich in vorteilhafter Weise ein in der Gewichtsermittlung 30 vorgesehener Mikrocomputer, mit dem insbesondere auch die zeitabhängigen Rechenvorgänge bezüglich der Beschleunigungsgrößen auf einfache Weise realisiert werden können.

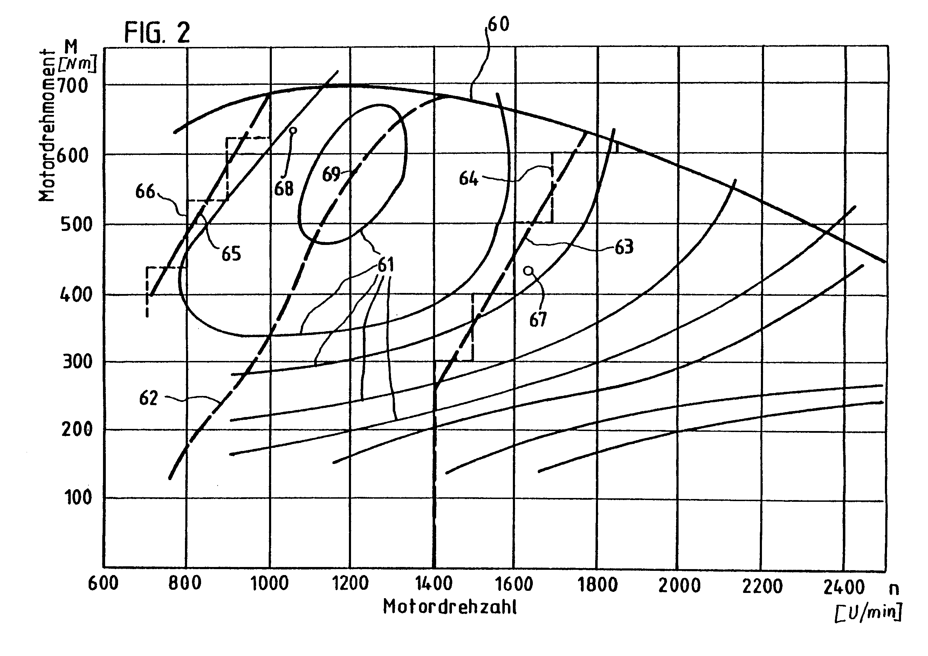

Im Diagramm nach Fig. 2 zeigt die Linie 60 für einen Dieselmotor den Verlauf der maximalen Antriebsmomente (bei Vollgas) des Motors über den verschiedenen Motordrehzahlen.

Die Linien 61 sind Linien gleichen spezifischen Kraftstoffverbrauchs, wobei der Punkt 69 den Betriebspunkt mit dem kleinsten spezifischen Kraftstoffverbrauch kennzeichnet. Mit größer werdender Entfernung vom Betriebspunkt 69 weisen die Linien 61 jeweils um einen bestimmten konstanten Betrag größere Kraftstoffverbräuche auf. Die Linien lassen sich mit üblichen Meßverfahren ermitteln. Wenn man nun für den gesamten Drehzahlbereich die Punkte kleinsten spezifischen Kraftstoffverbrauchs sucht, dann lassen sich diese mit der Linie 62, die etwa bei der Motordrehzahl 1 400 in die Linie 60 übergeht, darstellen. Der Motor sollte also seinen Betriebspunkt ständig möglichst nahe der Linie 62 haben.

Dieses wird allerdings vor allem bei gestuften Getrieben nicht immer möglich sein. Die Betriebspunkte zweier Gänge werden um den Drehzahlsprung zwischen diesen Gängen auseinanderliegen. Diesem Sachverhalt trägt die Linie 63 für ein bestimmtes Getriebe Rechnung. Wandert der Betriebspunkt im gerade gefahrenen Gang zu höheren Drehzahlen in den Bereich rechts hinter die Linie 63, beispielsweise zum Punkt 67, dann läge der Betriebspunkt eines höheren Ganges um den Drehzahlsprung niedriger im Punkt 68 und damit näher an der verbrauchsgünstigen Linie 62.

In der ersten Vergleichseinrichtung 45 wird nun die gestufte Linie 64, die angenähert der Linie 63 folgt, gespeichert und ständig geprüft, ob diese Linie zu höheren Drehzahlen hin übergeschritten wird. Ist dies der Fall, wird ein Umschaltsignal abgegeben.

In ähnlicher Weise wird in der zweiten Vergleichseinrichtung 47 der Vergleich mit der Grenzlinie 65 bzw. 66 durchgeführt. Gelangt der Betriebspunkt zur kleinen Drehzahl hin, über diese Linie 66 hinaus, wird ein Umschaltsignal in einen niedrigeren Gang abgegeben. Die Grenzlinien 64, 66 müssen entsprechend dem jeweiligen Gangsprung zwischen den einzelnen Gängen zu größeren oder kleineren Drehzahlen verschoben werden.

Weiterhin muß die Grenzlinie 64 zu höheren Drehzahlen verschoben werden, wenn der nächsthöhere Gang einen schlechteren Wirkungsgrad aufweist als der gerade gefahrene Gang. In gewissen Fällen kann es erforderlich sein, die Linie 66 zu höheren Drehzahlen zu verschieben, da der Motor bei den nach Wirtschaftlichkeitsgesichtspunkten empfehlenswerten niedrigeren Drehzahlen nicht mehr richtig rund läuft.

**Patentansprüche**

1. Kontrolleinrichtung für ein von einem Motor über ein die übersetzung vorzugsweise stufenweise variierendes Getriebe angetriebenes Fahrzeug mit folgenden Merkmalen :

a) Es ist ein Motor-Kennfeldspeicher (36) zur Ermittlung des vom Motor (6) abgegebenen momentanen Antriebsmomentes $M_A$ vorgesehen ;

b) es ist ein die Drehzahl $n_R$ wenigstens eines Fahrzeugrades (15) erfassender Sensor (16) vorgesehen, dessen Ausgangssignal einer Differenziereinrichtung zur Bestimmung einer aus dem zeitlichen Verlauf der Drehzahl $n_R$ des Fahrzeugrades (15) abgeleiteten Beschleunigungsgröße $\ddot{s}$

zugeführt ist ;

c) es ist eine Gewichtsermittlung (30) zur Berechnung des Fahrzeuggewichts unter Zuhilfenahme des momentanen Antriebsmomentes $M_A$ und der Beschleunigungsgröße š vorgesehen ;

d) es ist eine Momenten-Kontrolleinrichtung (24) zur Berechnung eines stationären Momentes $M_{stat}$, das zur beschleunigungslosen Fahrt des Fahrzeugs erforderlich ist, unter Zuhilfenahme des momentanen Momentes $M_A$, des Fahrzeuggewichts G und der Beschleunigungsgröße š vorgesehen ;

e) es ist eine Getriebesteuerung (18) mit Vergleichseinrichtungen (45, 47) vorgesehen, welche das stationäre Moment $M_{stat}$ mit nach Wirtschaftlichkeitsgesichtspunkten festgelegten Momenten-Grenzlinien (65, 63) vergleichen, und es wird ein Steuersignal für einen Gangwechsel dann abgegeben, wenn das stationäre Moment $M_{stat}$ nicht innerhalb des durch die Grenzlinien (65, 63) eingeschlossenen wirtschaftlichen Bereichs liegt.

2. Kontrolleinrichtung nach Anspruch 1, gekennzeichnet durch folgende Merkmale :

a) es ist ein die Drehzahl $n_A$ des Motors (6) erfassender Sensor (7) vorgesehen ;

b) es ist ein Geber (1) zur Erzeugung einer Motor-Steuergröße y vorgesehen ;

c) der Motor-Kennfeldspeicher (36) enthält eine Kennlinienschar, die die gegenseitige Abhängigkeit von Motor-Drehzahl $n_A$, Motor-Steuergröße y und momentanem Moment $M_A$ wiedergibt ;

d) ein Signalausgang (35) des Motor-Kennfeldspeichers (36) ist mit einem dem momentanen Moment $M_A$ zugeordneten Signaleingang (27) der Momenten-Kontrolleinrichtung (24) verbunden.

3. Kontrolleinrichtung nach Anspruch 1 für ein Fahrzeug mit einem als Brennkraftmaschine ausgebildeten Motor (6), der über ein Gaspedal gesteuert wird, dadurch gekennzeichnet, daß der Geber (1) als Gaspedal ausgebildet ist.

4. Kontrolleinrichtung nach wenigstens einem der Ansprüche 1 bis 3, dadurch gekennzeichnet, daß

a) die Gewichtsermittlung (30) unter Verwertung des momentanen Momentes $M_A$ und mehrerer zu verschiedenen Zeitpunkten $X_1$, $X_2$ ermittelter Werte der Fahrzeug-Beschleunigungsgrößen š eine dem Gewicht des Fahrzeugs entsprechende Gewichtsgröße G nach der Formel :

$$G = \frac{M_A}{f(š_{X_2}) - f(š_{X_1})}$$

b) ermittelt, wobei wenigstens einer der von der Gewichtsermittlung (30) zu verwertenden Werte der Beschleunigungsgröße š zu einem Zeitpunkt ermittelt wird, in dem das Fahrzeug dem Antrieb durch den Motor (6) unterliegt, und wobei wenigstens einer der von der Gewichtsermittlung (30) zu verwertenden Werte der Beschleunigungsgröße š zu einem Zeitpunkt ermittelt wird, in dem sich das Fahrzeug in einem antriebslosen Zustand befindet.

5. Kontrolleinrichtung nach wenigstens einem der Ansprüche 1 bis 4 für ein Fahrzeug mit einer Kupplung zur Trennung der angetriebenen Fahrzeugräder vom Antriebsstrang des Fahrzeugs, gekennzeichnet durch folgende Merkmale :

a) die Kupplung (9) ist mit einem Steuereingang (10) zum Steuern der Kupplungsbetätigung versehen ;

b) der Steuereingang der Kupplung (9) ist mit einem Steuerausgang (22) der Getriebesteuerung (18) verbunden ;

c) die Getriebesteuerung (18) erzeugt dann ein Steuersignal zur Trennung der Kupplung (9), wenn der dem antriebslosen Zustand des Fahrzeugs zugeordnete Wert der Beschleunigungsgröße š ermittelt wird.

6. Kontrolleinrichtung nach Anspruch 4, dadurch gekennzeichnet, daß die Ermittlung der Gewichtsgröße G wiederholt vorgenommen wird.

7. Kontrolleinrichtung nach Anspruch 6, dadurch gekennzeichnet, daß verschiedene ermittelte Gewichtsgrößen G zur Bildung eines Mittelwertes für die Gewichtsgröße G verwendet werden und daß dieser Mittelwert zur Anzeige oder Bestimmung des Gewichts des Fahrzeugs herangezogen wird.

8. Kontrolleinrichtung nach Anspruch 6 bis 7, dadurch gekennzeichnet, daß Mittel vorgesehen sind, die nur solche Gewichtsgrößen G oder nur solche Mittelwerte der Gewichtsgrößen G zur Auswertung kommen lassen, die eine vorgegebene Abweichung von einem vorgegebenen Wert oder einem früher ermittelten Wert der Gewichtsgrößen G nicht überschreiten.

9. Kontrolleinrichtung nach Anspruch 6 bis 8, dadurch gekennzeichnet, daß insbesondere nach einer Veränderung des Fahrzeuggewichts für die erste Ermittlung der Gewichtsgröße G ein festgelegter vorgegebener Wert der Gewichtsgröße G herangezogen wird.

10. Kontrolleinrichtung nach wenigstens einem der Ansprüche 1 bis 9, dadurch gekennzeichnet, daß die Momenten-Kontrolleinrichtung (24) eine Recheneinrichtung zur Berechnung der Differenz zwischen dem momentanen Antriebsmoment $M_A$ des Motors und dem Produkt aus Gewicht G und Beschleunigung ś nach der Formel :

$$M_{stat} = M_A - G \cdot f(\ddot{s})$$

enthält.

11. Kontrolleinrichtung nach wenigstens einem der Ansprüche 1 bis 10, dadurch gekennzeichnet, daß das stationäre Antriebsmoment $M_{stat}$ ständig ermittelt wird.

12. Kontrolleinrichtung nach wenigstens einem der Ansprüche 1 bis 11, dadurch gekennzeichnet, daß das stationäre Antriebsmoment $M_{stat}$ für weitere Gänge unter Berücksichtigung der Getriebeübersetzung nach der Formel

$$M'_{stat} = M_{stat} \frac{i}{i(neu)}$$

berechnet wird, wobei bedeuten :

$M'_{stat}$ = stationäres Moment in neuen Gang
i = Übersetzung im alten Gang
i (neu) = Übersetzung im neuen Gang

13. Kontrolleinrichtung nach wenigstens einem der Ansprüche 1 bis 12, dadurch gekennzeichnet, daß die Grenzlinien (65, 63) für den wirtschaftlichen Antriebsmomenten-Drehzahlbereich für das Hochschalten und das Herunterschalten um einen Drehzahlbetrag auseinanderliegen, der der Differenzdrehzahl zwischen den jeweiligen Gängen entspricht.

14. Kontrolleinrichtung nach wenigstens einem der Ansprüche 1-12, dadurch gekennzeichnet, daß der wirtschaftlich Antriebsmomenten-Drehzahlbereich bei niedrigen Drehzahlen begrenzt ist durch die Rundlaufgrenze des Motors.

15. Kontrolleinrichtung nach den Ansprüchen 1 bis 14, dadurch gekennzeichnet, daß die Grenzlinien (63, 65) des wirtschaftlichen Antriebsmomenten-Drehzahlbereiches abhängig sind von dem Wirkungsgrad des jeweiligen Ganges, wobei Gängen mit ungünstigem Wirkungsgrad kleinere Bereiche zugeordnet sind.

16. Kontrolleinrichtung nach wenigstens einem der Ansprüche 1 bis 15, dadurch gekennzeichnet, daß die Grenzlinien (65, 63) des wirtschaftlichsten Antriebsmomenten-Drehzahlbereiches über den Drehzahlbereich abschnittsweise mit konstanten Momentenwerten gespeichert sind.

17. Kontrolleinrichtung nach wenigstens einem der vorhergehenden Ansprüche, dadurch gekennzeichnet, daß das Einlegen eines neuen Ganges dann bewirkt wird, wenn die Vergleichseinrichtungen (45, 47) feststellen, daß das stationäre Antriebsmoment $M'_{stat}$ in einem neuen Gang günstiger zum durch die Grenzlinien (65, 63) des wirtschaftlichsten Antriebsmomenten-Drehzahlbereiches begrenzten Bereich liegt als das jeweilige dem alten Gang zugeordnete stationäre Antriebsmoment $M_{stat}$.

18. Kontrolleinrichtung nach den Ansprüchen 1 bis 17, dadurch gekennzeichnet, daß zur Ausführung der Berechnungen mindestens ein Mikrocomputer verwendet wird.

## Claims

1. Control device for a vehicle driven by a motor by way of a transmission that preferably changes the transmission ratio in steps, which device has the following features :

a) there is provided a store (36) recording the characteristics of the motor for ascertaining the instantaneous driving torque $M_A$ delivered by the motor (6) ;

b) there is provided a sensor (16) registering the number of revolutions per minute $n_R$ of at least one vehicle wheel (15) of which the output signal is fed to a differentiating device for ascertaining a magnitude ś of acceleration derived from the variation with time of the number of revolution per minute $n_R$ of the vehicle wheel (15) ;

c) there is a provided a weight-assessment means (30) for calculating the weight of the vehicle from the instantaneous driving torque $M_A$ and the magnitude ś of acceleration.

d) there is provided a torque-control device (24) for calculating a steady torque $M_{stat}$, which is necessary for driving the vehicle without acceleration, from the instantaneous torque $M_A$, the vehicle weight G and the magnitude ś of acceleration ;

e) there is provided a transmision-control means (18) with comparison devices (45, 47) which compare the steady torque $M_{stat}$ with torque limiting lines (65, 63) which have been determined on the basis of economy factors, and a control signal for a change in gear is released if the steady torque $M_{stat}$ does not lie within the economy range included by the limiting lines (65, 63).

2. Control device according to claim 1, characterised by the following features :

a) there is provided a sensor (7) registering the number of revolutions per minute $n_A$ of the motor (6) ;

b) there is provided a transmitter (1) for producing a motor-control magnitude y ;

c) the store (36) recording the characteristics of the motor contains a family of characteristics which represents the relationship between the number of revolutions per minute $n_A$ of the motor, the motor control magnitude y and the instantaneous torque $M_A$ ;

d) a signal output (35) of the store (36) recording the characteristics of the motor is connected to a signal input (27) of the torque-control device (24) associated with the instantaneous torque $M_A$.

3. Control device according to claim 1 for a vehicle with a motor (6), in the form of an internal combustion engine, which is controlled by an accelerator pedal, characterised in that the transmitter (1) is formed as the accelerator pedal.

4. Control device according to at least one of claims 1 to 3, characterised in that

a) the weight-assessment means (30), using the instantaneous torque $M_A$ and several values of the vehicle acceleration magnitude $\ddot{s}$ ascertained at different times $X_1$, $X_2$, determines a weight magnitude G corresponding to the weight of the vehicle in accordance with the formula :

$$G = \frac{M_A}{f(\ddot{s}_{X_2}) - f(\ddot{s}_{X_1})}$$

b) at least one of the values of the acceleration magnitude $\ddot{s}$ to be used by the weight-assessment means (30) being ascertained at a point in time at which the vehicle is being driven by the motor (6), and at least one of the values of the acceleration magnitude $\ddot{s}$ to be used by the weight-assessment means (30) being ascertained at a point in time at which the vehicle is not being driven by the motor.

5. Control device according to at least one of claims 1 to 4 for a vehicle with a clutch for disengaging the driven vehicle wheels from the drive line of the vehicle, characterised by the following features :

a) the clutch (9) is provided with a control input (10) for controlling the operation of the clutch ;

b) the control input of the clutch (9) is connected to a control output (22) of the transmission-control means (18) ;

c) the transmission-control means (18) produces a control signal for disengaging the clutch while the value of the acceleration magnitude $\ddot{s}$ associated with the non-driven state of the vehicle is ascertained.

6. Control device according to claim 4, characterised in that the weight magnitude G is repeatedly ascertained.

7. Control device according to claim 6, characterised in that the different weight magnitudes G ascertained are used to obtain a mean value for the weight magnitude G and this mean value is used to indicate or determine the weight of the vehicle.

8. Control device according to claims 6 to 7, characterised in that means are provided that permit use only of those weight magnitudes G or of those mean values of the weight magnitudes G that do not exceed a predetermined deviation from a predetermined value or from a previously ascertained value of the weight magnitudes G.

9. Control device according to claims 6 to 8, characterised in that especially after a change in the weight of the vehicle, a fixed predetermined value of the weight magnitude G is used for the first assessment of the weight magnitude G.

10. Control device according to at least one of claims 1 to 9, characterised in that the torque-control device (24) contains a calculating device for calculating the difference between the instantaneous driving torque $M_A$ of the motor and the product of the weight G and the acceleration $\ddot{s}$ in accordance with the formula :

$$M_{stat} = M_A - G \cdot f(\ddot{s})$$

11. Control device according to at least one of claims 1 to 10, characterised in that the steady driving torque $M_{stat}$ is continually ascertained.

12. Control device according to at least one of claims 1 to 11, characterised in that the steady driving torque $M_{stat}$ is calculated for other gears, taking into account the transmission ratio, in accordance with the formula

$$M'_{stat} = M_{stat} \frac{i}{i(new)}$$

9

in which

$M'_{stat}$ = steady torque in the new gear
$i$ = transmission ratio of the old gear
$i(new)$ = transmission ratio of the new gear.

13. Control device according to at least one of claims 1 to 12, characterised in that the limiting lines (65, 63) for the economy driving torque-number of revolutions per minute range for shifting up and shifting down differ from one another by a number of revolutions per minute that corresponds to the difference in number of revolutions per minute between the respective gears.

14. Control device according to at least one of claims 1 to 12, characterised in that the economy driving torque-number of revolutions per minute range is limited at low numbers of revolutions per minute by the rotational speed limit of the motor.

15. Control device according to claims 1 to 14, characterised in that the limiting lines (63, 65) of the economy driving torque-number of revolutions per minute range are dependent on the degree of efficiency of the gear concerned, smaller ranges being allocated to gears with an unfavourable degree of efficiency.

16. Control device according to at least one of claims 1 to 15, characterised in that the limiting lines (65, 63) of the greatest economy driving torque-number of revolutions per minute range are stored in portions of constant torque values with reference to a range of numbers of revolutions per minute.

17. Control device according to at least one of the preceding claims, characterised in that the engagement of a new gear is effected when the comparison devices (45, 47) ascertain that the steady driving torque $M'_{stat}$ in a new gear is more favourable to the range defined by the limiting lines (65, 63) of the greatest economy driving torque-number of revolutions per minute range than the steady driving torque $M_{stat}$ associated with the previous gear.

18. Control device according to claims 1 to 17, characterised in that at least one microcomputer is used for carrying out the calculations.

**Revendications**

1. Dispositif de commande d'un véhicule propulsé par un moteur via une transmission présentant de préférence une variation discontinue, caractérisé en ce que :

a) une mémoire (36) de réseau de caractéristiques du moteur est prévue pour la détermination du couple instantané $M_A$ délivré par le moteur (6) ;

b) un capteur (16) décelant la vitesse de rotation $n_R$ d'une roue (15) au moins du véhicule est prévu, dont le signal de sortie peut être appliqué à un différentiateur pour la détermination d'une grandeur d'accélération $\ddot{s}$ dérivée de la variation temporelle de la vitesse de rotation de la roue (15) du véhicule ;

c) un dispositif traducteur (30) est prévu pour le calcul du poids d'un véhicule à l'aide du couple instantané $M_A$ et de la grandeur d'accélération $\ddot{s}$ ;

d) un dispositif de contrôle du couple (24) est prévu pour le calcul d'un couple stationnaire $M_{stat}$ nécessaire pour un déplacement sans accélération, à l'aide du couple instantané $M_A$, du poids G du véhicule et de la grandeur d'accélération $\ddot{s}$ ; et

e) une commande (18) de la boîte de vitesses est prévue avec des comparateurs (45, 47), qui comparent le couple stationnaire $M_{stat}$ à des courbes limites de couple (65, 63) déterminées selon des critères de rentabilité ; et un signal de commande de changement de vitesse est délivré quand le couple stationnaire $M_{stat}$ ne se situe pas dans le domaine économique délimité par les courbes limites (65, 63).

2. Dispositif de commande selon revendication 1, caractérisé en ce que :

a) un capteur (7) est prévu pour déceler la vitesse de rotation $n_A$ du moteur (6) ;

b) un transmetteur (1) est prévu pour délivrer une grandeur de commande y du moteur ;

c) la mémoire (36) du réseau de caractéristiques du moteur contient une famille de courbes représentant la relation entre la vitesse de rotation $n_A$ du moteur, la grandeur de commande y du moteur et le couple instantané $M_A$ ; et

d) une sortie de signal (35) de la mémoire (36) du réseau de caractéristiques du moteur est reliée à une entrée de signal (27) du dispositif de contrôle du couple (24) affectée au couple instantané $M_A$.

3. Dispositif de commande selon revendication 1, destiné à un véhicule équipé d'un moteur (6) à combustion interne commandé par une pédale d'accélération, et caractérisé en ce que le transmetteur (1) est réalisé sous forme d'une pédale d'accélération.

4. Dispositif de commande selon une quelconque des revendications 1 à 3, caractérisé en ce que :

10

a) le dispositif traducteur (30) détermine, à l'aide du couple instantané $M_A$ et de plusieurs valeurs de grandeur d'accélération š du véhicule déterminées à des instants différents $x_1$, $x_2$, une grandeur de poids G correspondant au poids du véhicule selon la formule :

$$G = \frac{M_A}{f(\ddot{s}_{x_2}) - f(\ddot{s}_{x_1})}$$

et

b) une au moins des valeurs de la grandeur d'accélération š à traduire par le dispositif (30) est déterminée à un instant où le véhicule est propulsé par le moteur (6), et une au moins des valeurs de la grandeur d'accélération š à traduire par le dispositif (30) est déterminée à un instant où le véhicule n'est pas propulsé.

5. Dispositif de commande selon une quelconque des revendications 1 à 4, destiné à un véhicule équipé d'un embrayage isolant les roues motrices de la chaîne cinématique, et caractérisé en ce que :

a) l'embrayage (9) est muni d'une entrée (10) pour la commande de son actionnement ;

b) l'entrée de commande de l'embrayage (9) est reliée à une sortie de commande (22) de la commande (18) de la boîte de vitesses ; et

c) la commande (18) de la boîte de vitesses délivre un signal de commande pour l'isolement de l'embrayage (9) quand la valeur de la grandeur d'accélération š affectée à l'état non propulsé du véhicule est déterminée.

6. Dispositif de commande selon revendication 4, caractérisé en ce que la détermination de la grandeur de poids G est répétée.

7. Dispositif de commande selon revendication 6, caractérisé en ce que diverses grandeurs de poids G déterminées sont utilisées pour la formation d'une valeur moyenne de la grandeur de poids G ; et la valeur moyenne est utilisée pour l'indication ou la détermination du poids du véhicule.

8. Dispositif de commande selon revendications 6 et 7, caractérisé par des moyens qui provoquent uniquement la traduction des grandeurs de poids G ou de valeurs moyennes de ces dernières ne dépassant pas un écart prédéterminé par rapport à une valeur prédéterminée ou à une valeur précédemment déterminée des grandeurs de poids G.

9. Dispositif de commande selon revendications 6 à 8, caractérisé en ce qu'une valeur prédéterminée fixe des grandeurs de poids G est utilisée pour la première détermination des grandeurs de poids G, en particulier après une variante du poids du véhicule.

10. Dispositif de commande selon une quelconque des revendications 1 à 9, caractérisé en ce que le dispositif de contrôle du couple (24) comprend un dispositif de calcul de la différence entre le couple instantané $M_A$ du moteur et le produit du poids G par l'accélération š, selon la formule :

$$M_{stat} = M_A - G \cdot f(\ddot{s})$$

11. Dispositif de commande selon une quelconque des revendications 1 à 10, caractérisé par une détermination permanente du couple stationnaire $M_{stat}$.

12. Dispositif de commande selon une quelconque des revendications 1 à 11, caractérisé en ce que le couple stationnaire $M_{stat}$ est calculé pour d'autres vitesses, compte tenu du rapport de la boîte, selon la formule :

$$M'_{stat} = M_{stat} \frac{i}{i(\text{nouveau})}$$

avec :

$M'_{stat}$ = couple stationnaire à la nouvelle vitesse
i = rapport à l'ancienne vitesse
i (nouveau) = rapport à la nouvelle vitesse.

13. Dispositif de commande selon une quelconque des revendications 1 à 12, caractérisé en ce que les courbes limites (65, 63) du domaine couple économique-vitesse de rotation pour la montée et la descente de vitesse diffèrent d'une valeur absolue de la vitesse de rotation égale à la différence de vitesse entre les rapports considérés.

14. Dispositif de commande selon une quelconque des revendications 1 à 12, caractérisé en ce que le domaine couple économique-vitesse de rotation est limité aux faibles vitesses de rotation par la limite de concentricité du moteur.

15. Dispositif de commande selon une quelconque des revendications 1 à 14, caractérisé en ce que les courbes limites (63, 65) du domaine couple économique-vitesse de rotation dépendent du rendement sur le rapport considéré, des domaines plus petits étant affectés aux rapports à rendement défavorable.

16. Dispositif de commande selon une quelconque des revendications 1 à 15, caractérisé en ce que les courbes limites (65, 63) du domaine couple économique-vitesse de rotation sont mémorisées par secteur à couple constant sur la plage de vitesse de rotation.

17. Dispositif de commande selon une quelconque des revendications 1 à 16, caractérisé en ce qu'un changement de vitesse est effectué quand les comparateurs (45, 47) constatent que le couple stationnaire $M'_{stat}$ à une nouvelle vitesse se situe plus favorablement par rapport au domaine couple économique-vitesse de rotation délimité par les courbes limites (65, 63) que le couple stationnaire $M_{stat}$ affecté à l'ancienne vitesse.

18. Dispositif de commande selon revendications 1 à 17, caractérisé par l'emploi d'un micro-ordinateur au moins pour l'exécution des calculs.

FIG.1

Gewichtsermittlung

$$G \sim \frac{MA}{f(\check{S}_{x2}) - f(\check{S}_{x1})}$$

Momenten-kontrolleinrichtung

$Mstat \sim MA - G \cdot f(\check{S})$

Motor-Kennlinienfeld

Getriebesteuerung

n=1400÷1500; Mstat < 300
n=1500÷1600; Mstat < 400

n=700÷800; Mstat > 440
n=800÷900; Mstat > 530

Umschalten in höheren Gang

Umschalten in niedrigeren Gang

Motor

Kupplung

Getriebe

Rad

0 120 191

FIG. 2

Motordrehmoment M [Nm]

700 — 600 — 500 — 400 — 300 — 200 — 100

60

66 65 68 69 64 63 61 67 62

Motordrehzahl

600 800 1000 1200 1400 1600 1800 2000 2200 2400 n

[U/min]

0 120 191